# EUROPEAN PATENT SPECIFICATION

(11) **EP 3 171 443 B1**
(45) Date of publication and mention of the grant of the patent: **18.07.2018**
(21) Application number: 16198412.5
(22) Date of filing: 11.11.2016
(51) Int. Cl.: H01M 8/04858, H01M 8/0612, H01M 8/0662, H01M 8/04014, H01M 8/0432, H01M 8/04701, H01M 8/04746, H01M 8/0668, H01M 8/124

(54) **SOLID OXIDE FUEL CELL SYSTEM**
FESTOXID-BRENNSTOFFZELLENSYSTEM
SYSTÈME DE PILE À COMBUSTIBLE D'OXYDE SOLIDE

(30) Priority: 20.11.2015 JP 2015227369
(43) Date of publication of application: 24.05.2017
(73) Proprietor: Panasonic Intellectual Property Management Co., Ltd., Osaka-shi, Osaka 540-6207 (JP)
(72) Inventor: MORITA, Masashi, Osaka-shi, Osaka 540-6207 (JP); ZHANG, Jin, Osaka-shi, Osaka 540-6207 (JP); ISE, Takehiko, Osaka-shi, Osaka 540-6207 (JP); WAKITA, Hidenobu, Osaka-shi, Osaka 540-6207 (JP)
(74) Representative: Grünecker Patent- und Rechtsanwälte PartG mbB

(56) References cited:
- JP-A- 2006 032 291
- US-A1- 2002 031 453
- US-A1- 2007 224 475

## Description

### BACKGROUND

### 1. Technical Field

The present disclosure relates to a solid oxide fuel cell system.

### 2. Description of the Related Art

A fuel cell cogeneration system has received attention as one type of distributed power generator. In particular, development of a solid oxide fuel cell (hereinafter called an "SOFC") operating at high temperature with use of a solid oxide as an electrolyte has been progressed as a distributed power generator having high power generation efficiency.

In a solid oxide fuel cell system (hereinafter called an "SOFC" system) including the SOFC, exhaust gas containing substances to be purified, such as carbon monoxide, is discharged during power generation. Accordingly, the SOFC system including a purification catalyst (i.e., an exhaust gas purification catalyst) disposed in an exhaust passage is proposed to remove the substances that are to be purified (see, e.g., Japanese Unexamined Patent Application Publication No. 2015-18750). The SOFC system disclosed in Japanese Unexamined Patent Application Publication No. 2015-18750 includes a startup heater because of the necessity of heating the purification catalyst from ordinary temperature up to activating temperature. In Japanese Unexamined Patent Application Publication No. 2015-18750, particularly, an evaporator can also be heated together with the purification catalyst by the startup heater. Solid oxide fuel cell systems comprising a purifier are described in US2002/0031453 A1 and JP2006032291 A.

### SUMMARY

One non-limiting and exemplary embodiment provides a solid oxide fuel cell system capable of suppressing reduction in durability of a purification catalyst that is included in a purifier.

In one general aspect, the techniques disclosed here feature a solid oxide fuel cell system as defined in claim 1.

The solid oxide fuel cell system according to one aspect of the present disclosure has an advantageous effect of being able to suppress reduction in durability of the purification catalyst that is put in the purifier. Further advantageous embodiments are defined in the dependent claims.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 illustrates one example of a configuration of an SOFC system according to an embodiment of the present disclosure;
Fig. 2 is a graph depicting one example of activity states of a purification catalyst before SO₂ poisoning and after SO₂ poisoning;
Fig. 3 is a graph depicting one example of an activity state of the purification catalyst in the case of heating the purification catalyst to a predetermined temperature after the SO₂ poisoning; and
Fig. 4 illustrates one example of a configuration of an SOFC system according to Example 6 of the embodiment of the present disclosure.

### DETAILED DESCRIPTION

### (Underlying Knowledge Forming Basis of the Present Disclosure)

The inventors have conducted intensive studies on the SOFC system. As a result, the inventors have gained the following knowledge. The SOFC system is operated at high temperature from 550°C to 750°C, for example, and is able to effectively utilize heat generated during power generation. Stated in another way, in the SOFC system, anode off-gas discharged from an anode of the SOFC is ignited and is burnt together with cathode off-gas discharged from a cathode of the SOFC, thereby generating exhaust gas. In the SOFC system, a power generation system with high energy efficiency is realized by effectively utilizing heat of the exhaust gas. However, as the heat of the exhaust gas is utilized more efficiently, the exhaust gas at lower temperature is supplied to a purifier that is disposed in an exhaust path near its outlet. The heat of the exhaust gas can be utilized, for example, to preheat cathode gas supplied to the SOFC, to preheat a material for use in power generation, and to heat an evaporator. However, when the heat of the exhaust gas is effectively utilized in such a manner, temperature of the exhaust gas at timing of being supplied to the purifier is fairly lower than that at timing of being generated.

The inventors have found that, with deterioration of a purification catalyst contained in the purifier, activity of the purification catalyst at relatively low temperature reduces, and purification characteristics for substances to be cleaned up, such as carbon monoxide, degrade. The inventors have also found that, when the exhaust gas at temperature having lowered is supplied to the purifier, concentrations of the substances to be cleaned up, which are contained in the exhaust gas discharged to the outside of the SOFC system, increase with degradation of the purification characteristics of the purification catalyst.

In addition, the inventors have focused attention to the fact that a small amount of SO₂ is contained as an impurity in cathode gas (e.g., air) supplied to the SOFC and hence SO₂ is contained in the exhaust gas as well. Moreover, the inventors have recognized a possibility that the purification catalyst may deteriorate due to SO₂ poisoning. The inventors have further found that, when the purification catalyst deteriorates due to SO₂ poisoning, the activity of the purification catalyst at relatively low temperature may disappear as described above, and hence durability of the purification catalyst may reduce.

On the basis of the findings described above, the inventors have conducted studies on the SOFC system capable of suppressing reduction in durability of the purification catalyst during operation (i.e., during power generation in the SOFC) and, as a result of the studies, have accomplished the SOFC system according to the present disclosure. In more detail, the following embodiments are proposed in the present disclosure.

A solid oxide fuel cell system according to a first aspect of the present disclosure as defined in claim 1.

With the features described above, since the controller raises the temperature of the purifier to 300°C or higher for the predetermined time during the operation of the solid oxide fuel cell in an exemplary case, it is possible to recover activity of the purification catalyst, the activity having reduced due to sulfur poisoning. Therefore, the solid oxide fuel cell system according to the first aspect of the present disclosure has an advantageous effect that reduction in durability of the purification catalyst in the purifier can be suppressed. From the viewpoint of energy saving, the temperature of the purifier is preferably raised during power generation (e.g., during rated operation).

Here, the term "rated operation" implies that, in the solid oxide fuel cell system, the power generation by the solid oxide fuel cell is performed under rated operating conditions. The term "rated operating conditions" implies operating conditions specified to obtain a predetermined power generation output.

According to a second aspect of the present disclosure, in addition to the first aspect, the solid oxide fuel cell system is defined by claim 2.

With the features described above, the controller can make control to reduce the flow rate of the cathode gas supplied from the cathode gas supplier. It is hence possible to reduce an amount of heat removed from the exhaust gas by the cathode gas, and to raise the temperature of the exhaust gas that is utilized to heat the purifier. As a result, in the solid oxide fuel cell system according to the second aspect of the present disclosure, the temperature of the purifier can be raised to 300°C or higher for the predetermined time.

According to a third aspect of the present disclosure, in addition to the first aspect, the solid oxide fuel cell system is defined by claim 3.

With the features described above, the controller can make control to increase the flow rate of the cathode gas supplied from the cathode gas supplier. By increasing the flow rate of the cathode gas, an amount of heat removed from the exhaust gas by the cathode gas is increased, but the flow rate of the exhaust gas produced by the combustor can also be increased. Therefore, when an increase in an amount of heat specific to the exhaust gas at the increased flow rate is larger than the amount of heat removed from the exhaust gas by the cathode gas, the temperature of the exhaust gas supplied to the purifier can be raised eventually. As a result, in the solid oxide fuel cell system according to the third aspect of the present disclosure, the temperature of the purifier can be raised to 300°C or higher for the predetermined time.

According to a fourth aspect of the present disclosure, in addition to the first aspect, the controller may raise the temperature of the purifier by performing control to reduce a power generation output of the solid oxide fuel cell.

With the feature described above, since the controller performs control to reduce the power generation output of the solid oxide fuel cell, a flow rate of the anode gas, which is contained in anode off-gas and has not been utilized for the power generation, can be increased. Thus, the flow rate of the anode gas, which has not been utilized for the power generation and is utilizable for combustion in the combustor, can be increased, and the temperature of the exhaust gas produced by the combustor can be raised. As a result, the temperature of the exhaust gas supplied to the purifier can be raised, and the temperature of the purifier can be raised to 300°C or higher for the predetermined time.

According to a fifth aspect of the present disclosure, in addition to the first aspect, the solid oxide fuel cell system may further include a power generation gas supplier that supplies the power generation gas to the reformer, and the controller may raise the temperature of the purifier by controlling the power generation gas supplier to increase a flow rate of the power generation gas supplied to the reformer.

With the features described above, since the controller controls the power generation gas supplier to increase the flow rate of the power generation gas supplied to the reformer, a flow rate of the anode gas, which has not been utilized for the power generation and is utilizable for combustion in the combustor, can be increased. Hence the temperature of the exhaust gas produced by the combustor can be raised. As a result, the temperature of the exhaust gas supplied to the purifier can be raised, and the temperature of the purifier can be raised to 300°C or higher for the predetermined time.

According to a sixth aspect of the present disclosure, in addition to the first aspect, the solid oxide fuel cell system may further include a reformation water supplier that supplies reformation water utilized to reform the power generation gas in the reformer, and an evaporator that evaporates the reformation water supplied from the reformation water supplier by utilizing heat of the exhaust gas, and that produces steam, and the controller may raise the temperature of the purifier by controlling the reformation water supplier to reduce a flow rate of the reformation water supplied to the evaporator.

With the features described above, since the controller controls the reformation water supplier to reduce the flow rate of the reformation water supplied to the evaporator, an amount of heat utilized in the evaporator to evaporate the reformation water can be reduced. As a result, the temperature of the exhaust gas can be raised, and the temperature of the purifier can be raised to 300°C or higher for the predetermined time.

According to a seventh aspect of the present disclosure, in addition to the second aspect, the solid oxide fuel cell system may further include a temperature sensor that senses the temperature of the purifier, and a heater that heats the purifier, and the controller may control the heater to heat the purifier upon determining, on the basis of a result sensed by the temperature sensor, that the temperature of the purifier does not reach 300°C when the temperature of the purifier is raised.

With the features described above, when it is determined, on the basis of a result sensed by the temperature sensor, that the temperature of the purifier does not reach 300°C, the purifier can be heated up to 300°C with the provision of the heater. Thus, the temperature of the purifier can be reliably raised to 300°C or higher.

Details of an embodiment will be described below with reference to the drawings.

### [Embodiment]

### (Configuration of SOFC System)

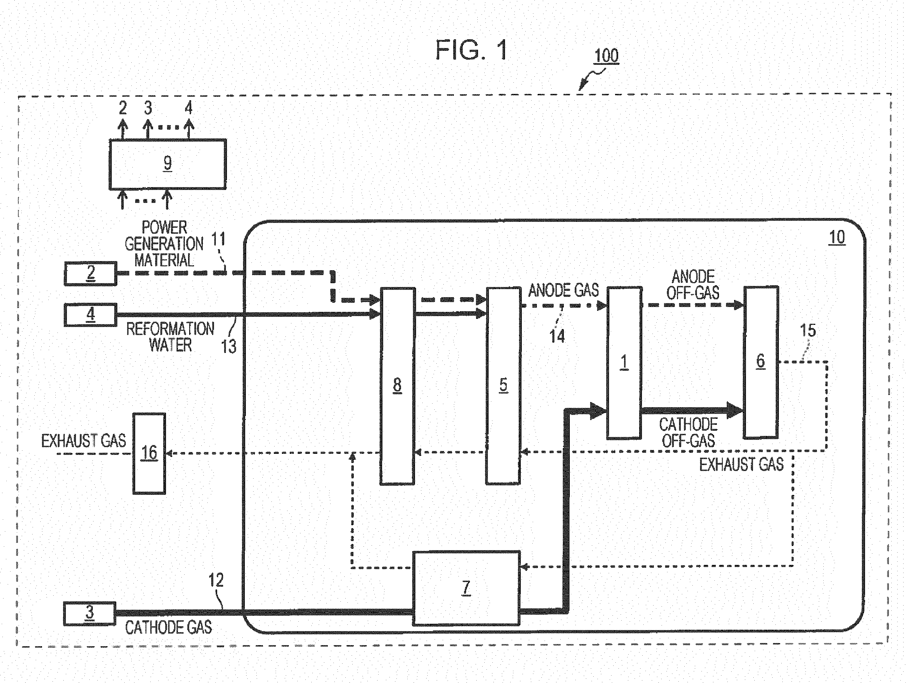

A configuration of an SOFC system 100 according to the embodiment is described below with reference to Fig. 1. Fig. 1 illustrates one example of the configuration of the SOFC system 100 according to the embodiment of the present disclosure.

As illustrated in Fig. 1, the SOFC system 100 according to the embodiment includes an SOFC 1, a power generation gas supplier 2, a cathode gas supplier 3, a reformation water supplier 4, a reformer 5, a combustor 6, an air heat exchanger 7, an evaporator 8, and a controller 9.

The reformer 5 reforms a power generation gas having been supplied to the reformer 5 and produces hydrogen-containing gas as anode gas. More specifically, the power generation gas supplier 2 supplies the power generation gas to the evaporator 8 through a material supply path 11. Furthermore, the reformation water supplier 4 supplies water for use in the reformation to the evaporator 8 through a water supply path 13. The power generation gas supplier 2 is constituted to be able to adjust a flow rate of the power generation gas supplied therefrom in accordance with a control command from the controller 9. The reformation water supplier 4 is constituted to be able to adjust a flow rate of the reformation water supplied therefrom in accordance with a control command from the controller 9.

The evaporator 8 evaporates the supplied reformation water and then supplies steam (water vapor) to the reformer 5 after mixing the steam with the power generation gas supplied to the reformer 5. Upon a gas mixture of the steam and the power generation gas being supplied, the reformer 5 produces the hydrogen-containing gas (anode gas) through a steam reforming reaction. The reformer 5 supplies the produced anode gas to the SOFC 1 through an anode gas path 14.

A reforming reaction carried out in the reformer 5 is not limited to the steam reforming reaction referred to above. As an alternative, though not specifically illustrated in Fig. 1, the system may be constituted to be able to further supply air to the reformer 5, and the reformer 5 may produce hydrogen-containing gas by an auto-thermal method, for example, with use of the supplied air.

The power generation gas supplied to the SOFC system 100 may be a material containing an organic compound that is made up of at least carbon and hydrogen as constituent elements, Examples of the power generation gas include gases containing organic compounds made up of at least carbon and hydrogen, such as city gas, natural gas, LPG, and LNG each containing methane as a main component, hydrocarbons, and alcohols such as methanol. The reformer 5 produces the hydrogen-containing gas by causing the power generation gas to react with the steam (i.e., through the reforming reaction) with the aid of a Ru catalyst or a Ni catalyst, for example.

When a sulfur compound is added as an odorant to the power generation gas, or when the power generation gas contains a sulfur compound derived from the material, there is a possibility that the Ru catalyst or the Ni catalyst used in the reformer 5 may deteriorate due to poisoning, or that reduction in performance of the fuel cell may occur due to poisoning of an anode (fuel pole) of the fuel cell. To avoid such a possibility, when the power generation gas contains a sulfur compound, a desulfurizer (not illustrated) for removing the sulfur compound from the power generation gas may be further disposed in a stage upstream of the reformer 5.

The SOFC 1 generates electric power through an electrochemical reaction from the anode gas produced by the reformer 5 and cathode gas containing oxygen. More specifically, the anode gas is supplied to the anode of the SOFC 1 from the reformer 5 through an anode gas path 14. On the other hand, the cathode gas is supplied to a cathode of the SOFC 1 from the cathode gas supplier 3 through a cathode gas path 12. The SOFC 1 generates electric power by employing the anode gas and the cathode gas both supplied to the SOFC 1. The SOFC 1 discharges, to the combustor 6, anode off-gas containing the anode gas that has not been used in the power generation, and cathode off-gas containing the cathode gas that has not been used in the power generation. The cathode gas supplier 3 is constituted to be able to adjust a flow rate of the cathode gas, which is supplied from the cathode gas supplier 3, in accordance with a control command from the controller 9.

The combustor 6 includes an ignitor (not illustrated) for igniting the anode off-gas discharged from the SOFC 1, and produces exhaust gas by burning the anode off-gas together with the cathode off-gas discharged from the SOFC 1. The exhaust gas generated by the combustor 6 flows through an exhaust path 15, and it is discharged to the outside of the SOFC system through a purifier 16.

The exhaust gas produced by the combustor 6 flows through the reformer 5, the evaporator 8, and the air heat exchanger 7 such that the reformer 5 and the evaporator 8 are heated to predetermined temperatures by heat of the exhaust gas before the exhaust gas reaches the purifier 16. Furthermore, the exhaust gas is subjected to heat exchange in the air heat exchanger 7 with respect to the cathode gas in a stage before the cathode gas is supplied to the SOFC 1. Hence the cathode gas can be preheated.

Moreover, in order to effectively utilize the heat of the exhaust gas, the SOFC system 100 is constituted, as illustrated in Fig. 1, in a state that the SOFC 1, the reformer 5, the combustor 6, the air heat exchanger 7, and the evaporator 8 are contained within a housing 10 covered with a heat insulating member, the housing 10 being called a hot module.

The purifier 16 includes a purification catalyst heated by the heat of the exhaust gas and acting to remove substances to be cleaned up, which are contained in the exhaust gas. The purifier 16 is disposed near an outlet of the exhaust path 15. The exhaust gas of which heat has been partly consumed by the reformer 5, the air heat exchanger 7, the evaporator 8, etc. flows through the purifier 16. When the exhaust gas flows through the purifier 16, the temperature of the purification catalyst is raised by the heat of the exhaust gas, while the substances to be cleaned up, which are contained in the exhaust gas, are removed by the purification catalyst. Accordingly, it can be said that the temperature of the purifier 16 (i.e., the temperature of the purification catalyst) is in a proportional relation to the temperature of the exhaust gas. In the SOFC system 100 according to this embodiment, the temperature of the purifier 16 (i.e., the temperature of the purification catalyst) during the power generation by the SOFC 1 under rated operating conditions is held within a temperature range of not lower than about 150°C and not higher than about 250°C although it varies depending on operating conditions, conditions of heat radiation and heat conduction from the housing 10, and other various conditions. Examples of the substances to be cleaned up, which are contained in the exhaust gas, are carbon monoxide (CO), hydrocarbons (HC), and oxygen nitrides (NOx).

### (Activity State of Purification Catalyst)

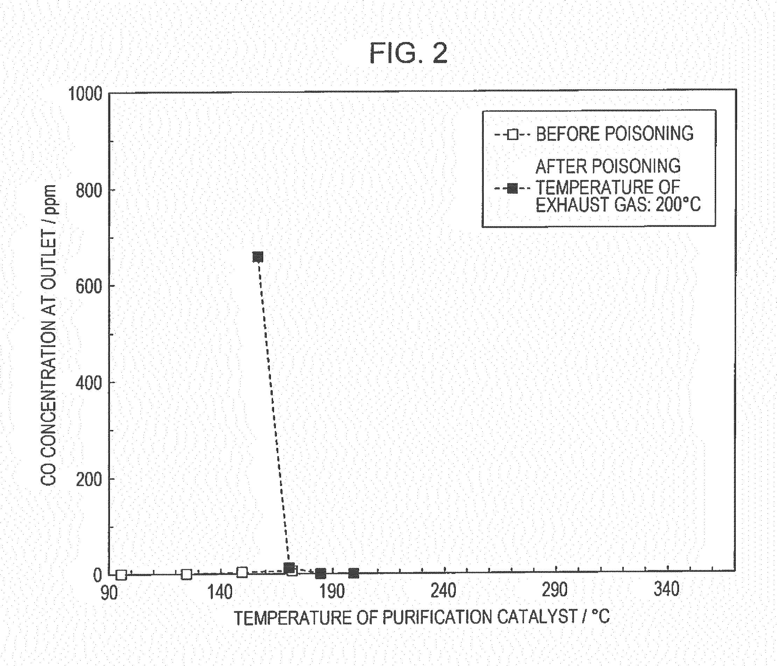

As described above, there is a possibility that, because the exhaust gas contains a small amount of sulfur dioxide (SO₂), the purification catalyst may deteriorate due to the SO₂ poisoning. The difference in activity state of the purification catalyst between before the SO₂ poisoning and after the SO₂ poisoning is described here with reference to Fig. 2. Fig. 2 is a graph depicting one example of activity states of the purification catalyst before the SO₂ poisoning and after the SO₂ poisoning. In Fig. 2, the horizontal axis denotes temperature (°C) of the purification catalyst, and the vertical axis denotes CO concentration (ppm) at the outlet of the exhaust path 15. Thus, Fig. 2 represents a variation of the CO concentration with respect to the catalyst temperature (i.e., temperature dependency of the CO concentration).

In experiments, a Pt/Al₂O₃ catalyst held on a honeycomb of 400 CPSI (cells per square inch) was used as the purification catalyst. Exhaust gas having the space velocity (SV) of GHSV = 60000h⁻¹ and containing 1000 ppm of CO, 3.6% of CO₂, 7.7% of O₂, 65.9% of N₂, and 22.6% of H₂O was introduced to flow through the SOFC system. A thermocouple was disposed upstream of the purification catalyst, and temperature dependency of the CO concentration was examined in the case of lowering the temperature of the purification catalyst to 200°C or below. Thereafter, 13.5 ppm of SO₂ was supplied to the purifier 16 to continuously develop a reaction for 48 hours in a state of the temperature of the exhaust gas being held at 200°C. The supply of SO₂ was then stopped. The temperature dependency of the CO concentration was examined again in the case of lowering the temperature of the purification catalyst to 200°C or below.

As illustrated in Fig. 2, before the SO₂ poisoning of the purification catalyst, the CO concentration at the outlet of the exhaust path 15 was maintained at about 0 ppm with respect to 1000 ppm of the CO concentration at an inlet of the exhaust path 15 over an entire temperature zone where the catalyst temperature was 200°C or below. In other words, the activity of the purification catalyst was maintained. On the other hand, it was found that, after the SO₂ poisoning of the purification catalyst, the CO concentration abruptly increased and the activity of the purification catalyst disappeared at the temperature of the purification catalyst being 180°C or below.

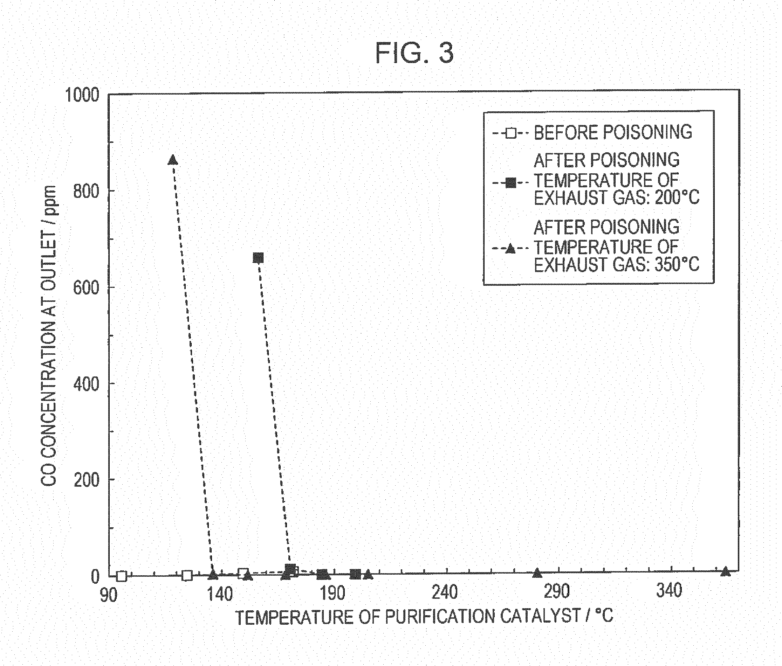

An activity state of the purification catalyst in the case of heating the purification catalyst to a predetermined temperature under conditions for the catalyst reaction after the SO₂ poisoning of the purification catalyst is described here with reference to Fig. 3. In the case described here, the predetermined temperature was set to 300°C or lower, and the temperature of the purification catalyst was raised up to 350°C. Fig. 3 is a graph depicting one example of an activity state of the purification catalyst in the case of heating the purification catalyst to the predetermined temperature after the SO₂ poisoning.

Fig. 3 represents a variation of the CO concentration with respect to the temperature of the purification catalyst (i.e., temperature dependency of the CO concentration), as in Fig. 2, with the horizontal axis denoting temperature (°C) of the purification catalyst and the vertical axis denoting CO concentration (ppm) at the outlet of the exhaust path 15. The temperature of the purification catalyst in the SOFC system 100 is raised by utilizing the heat of the exhaust gas that is supplied to the purifier 16. Accordingly, the temperature of the exhaust gas supplied to the purifier 16 is to be increased in order to raise the temperature of the purification catalyst. Manners for raising the temperature of the exhaust gas will be described in detail later.

As illustrated in Fig. 3, the purification catalyst was heated after the SO₂ poisoning to the predetermined temperature of 300°C or higher (350°C here), and reduction in the temperature of the purification catalyst and change in the CO concentration at the outlet of the exhaust path 15 were observed. As seen from Fig. 3, it was found that, in the case of heating the purification catalyst to the predetermined temperature of 350°C after the SO₂ poisoning, the CO concentration at the outlet of the exhaust path 15 abruptly increased and the activity of the purification catalyst disappeared at a time when the temperature of the purification catalyst lowered to 140°C or below. On the other hand, it was found that, in the case of heating the purification catalyst to 200°C after the SO₂ poisoning, namely in the case of holding the catalyst temperature at a level during the operation under the rated operating conditions, the CO concentration abruptly increased and the activity of the purification catalyst disappeared, as illustrated in Fig. 3, at a time when the temperature of the purification catalyst lowered to 180°C or below. From the above observation results, it is understood that the activity of the purification catalyst can be maintained until reaching 140°C, as a result of heating the purification catalyst to the predetermined temperature of 300°C or higher, particularly 350°C, after the SO₂ poisoning. In other words, it is recognized that the activity of the purification catalyst, which has reduced due to the SO₂ poisoning, can be regenerated (recovered) by heating the purification catalyst to the predetermined temperature (300°C or higher, particularly 350°C) after the SO₂ poisoning.

The timing of raising the temperature of the purification catalyst is not limited to a period during the rated operation, and it may be during an operation other than the rated operation. The temperature of the purification catalyst may be raised in a state where the operation is stopped.

On the basis of the above-described results, in the SOFC system 100 according to this embodiment, the purification catalyst in the purifier 16 is temporarily heated to the predetermined temperature for a predetermined time during the operation of the SOFC system 100 under the rated operating conditions such that the purification catalyst can be regenerated (recovered). More specifically, in the SOFC system 100, the temperature of the exhaust gas is raised at predetermined timing in accordance with one of manners described in the following Examples 1 to 6, thereby heating the purification catalyst in the purifier 16 to the predetermined temperature.

The SOFC system 100 according to this embodiment may further include an indicator 24 that indicates an operation status. The indicator 24 is, e.g., a remote controller or a lamp disposed on a main body. When the purification catalyst in the purifier 16 is under heating to the predetermined temperature, the indicator 24 may indicate that an operation of raising the catalyst temperature is being performed. In a practical example, the indicator 24 indicates a message of "under warm-up" or "under clean-up".

The SOFC system 100 according to this embodiment is described, by way of example, as being operated under the rated operating conditions given below. Thus, it is assumed that the flow rate of the power generation gas supplied from the power generation gas supplier 2 is 2.08 NLM, and that the flow rate of the cathode gas supplied from the cathode gas supplier 3 is 49 NLM. It is also assumed that a stoichiometric ratio (S/C) of steam to the power generation gas when the hydrogen-containing gas is produced through the steam reforming reaction is given by 2.5, and that a power generation output of the SOFC 1 is 700 W. It is further assumed that, as a result of setting a heat radiation amount from the housing 10, a heat conduction area in the housing 10, etc. to proper values, the temperature of the exhaust gas supplied to the purifier 16 during the power generation is held at 240°C.

### (Example 1)

In the SOFC system 100 according to Example 1 of the embodiment, the purification catalyst in the purifier 16 may be temporarily heated to the predetermined temperature for the predetermined time by reducing the flow rate of the cathode gas supplied to the SOFC system 100 under the rated operating conditions described above. The predetermined time may be, for example, 30 minutes to 1 hour, and the predetermined temperature may be 300°C or higher.

More specifically, in the SOFC system 100 according to Example 1, the controller 9 controls the cathode gas supplier 3 at predetermined timing during the operation under the rated operating conditions (i.e., during the power generation of the SOFC 1) to reduce the flow rate of the cathode gas, which is supplied to the SOFC 1, for the purpose of raising the temperature of the exhaust gas and raising the temperature of the purifier 16. Thus, in the SOFC system 100 according to Example 1, by reducing the flow rate of the supplied cathode gas to be smaller than that under the rated operating conditions, it is possible to reduce an amount of heat utilized in heat exchange between the cathode gas and the exhaust gas in the air heat exchanger 7, for example, and to raise the temperature of the exhaust gas. As a result, the temperature of the purification catalyst in the purifier 16 can be raised to 300°C or higher for the predetermined time.

### (Example 2)

In the SOFC system 100 according to Example 2 of the embodiment, the purification catalyst in the purifier 16 may be temporarily heated to the predetermined temperature for the predetermined time by increasing the flow rate of the cathode gas supplied to the SOFC system 100 under the rated operating conditions described above.

More specifically, in the SOFC system 100 according to Example 2, the controller 9 controls the cathode gas supplier 3 at predetermined timing during the operation under the rated operating conditions to increase the flow rate of the cathode gas, which is supplied to the SOFC 1, for the purpose of raising the temperature of the exhaust gas and raising the temperature of the purifier 16. Thus, in the SOFC system 100 according to Example 2, by increasing the flow rate of the supplied cathode gas to be larger than that under the rated operating conditions, an amount of heat conducted to the cathode gas from the exhaust gas in the heat exchange between the cathode gas and the exhaust gas in the air heat exchanger 7 is increased. However, the flow rate of the exhaust gas produced by the combustor 6 can also be increased by increasing the flow rate of the supplied cathode gas. Therefore, when an increase in an amount of heat specific to the exhaust gas at the increased flow rate is larger than an amount of heat removed from the exhaust gas by the cathode gas, the temperature of the exhaust gas supplied to the purifier 16 can be raised eventually. As a result, the temperature of the purification catalyst in the purifier 16 can be raised to 300°C or higher for the predetermined time.

### (Example 3)

In the SOFC system 100 according to Example 3 of the embodiment, the purification catalyst in the purifier 16 may be temporarily heated to the predetermined temperature for the predetermined time by reducing the power generation output of the SOFC 1 under the rated operating conditions described above.

More specifically, in the SOFC system 100 according to Example 3, the controller 9 performs control to reduce the power generation output of the SOFC 1 at predetermined timing during the operation under the rated operating conditions for the purpose of raising the temperature of the exhaust gas and raising the temperature of the purifier 16. On that occasion, only the power generation output is reduced while the flow rates of the supplied power generation gas and the supplied cathode gas are held at the same values as those under the rated operating conditions. Accordingly, a flow rate of the anode gas, which is contained in the anode off-gas and has not been utilized for the power generation, can be increased. Thus, by increasing the flow rate of the anode gas that has not been utilized for the power generation and that is utilizable for the combustion in the combustor 6, the temperature of the exhaust gas produced by the combustor 6 can be raised. In other words, an amount of heat given to the exhaust gas is increased by reducing the fuel utilization (UF) in the power generation and by employing part of the fuel (anode gas), which is to be utilized in the power generation, for the combustion in the combustor 6. The temperature of the exhaust gas can be hence raised to a value higher than that during the operation under the rated operating conditions. As a result, the temperature of the purification catalyst in the purifier 16 can be raised to 300°C or higher for the predetermined time.

### (Example 4)

In the SOFC system 100 according to Example 4 of the embodiment, the purification catalyst in the purifier 16 may be temporarily heated to the predetermined temperature for the predetermined time by increasing the flow rate of the power generation gas supplied to the reformer 5.

More specifically, in the SOFC system 100 according to Example 4, the controller 9 controls the power generation gas supplier 2 to increase the flow rate of the power generation gas supplied to the reformer 5 at predetermined timing during the operation under the rated operating conditions for the purpose of raising the temperature of the exhaust gas and raising the temperature of the purifier 16. With such control, a flow rate of the anode gas, which has not been utilized for the power generation and is utilizable for the combustion in the combustor 6, can be increased. Accordingly, the temperature of the exhaust gas produced by the combustor 6 can be raised. Thus, a proportion of the power generation gas (anode gas) utilized for the power generation is reduced, while a proportion of the power generation gas (anode gas) utilized for the combustion in the combustor 6 is increased. In other words, as in Example 3, an amount of heat given to the exhaust gas is increased by reducing the fuel utilization (UF) in the power generation and by increasing part of the fuel (anode gas) supplied to be utilized for the power generation, the part being used for the combustion in the combustor 6. The temperature of the exhaust gas can be hence raised to a value higher than that during the operation under the rated operating conditions. As a result, the temperature of the purification catalyst in the purifier 16 can be raised.

The inventors have found that, by increasing the flow rate (2.08 NLM) of the power generation gas under the rated operating conditions to 4.0 NLM, for example, the temperature of the exhaust gas can be raised to 800°C, and that the temperature of the purification catalyst in the purifier 16 can be raised to 350°C or higher.

### (Example 5)

In the SOFC system 100 according to Example 5 of the embodiment, the purification catalyst in the purifier 16 may be temporarily heated to the predetermined temperature for the predetermined time by reducing an amount of steam produced from the evaporator 8, and reducing an S/C value. Here, "reducing an S/C" is to reduce the flow rate of the reformation water supplied to the evaporator 8.

More specifically, in the SOFC system 100 according to Example 5, the controller 9 controls the reformation water supplier 4 to reduce the flow rate of the reformation water supplied to the evaporator 8 at predetermined timing during the operation under the rated operating conditions for the purpose of raising the temperature of the exhaust gas and raising the temperature of the purifier 16. With such control, since the S/C value can be reduced, namely an amount of the supplied reformation water can be reduced, an amount of heat utilized to evaporate the reformation water can be reduced. The temperature of the exhaust gas can be hence raised to a value higher than that during the operation under the rated operating conditions. As a result, the temperature of the purification catalyst in the purifier 16 can be raised.

The inventors have found that, by reducing the S/C value (S/C = 2.5) under the rated operating conditions to S/C = 2.2, the temperature of the exhaust gas supplied to the purifier 16 can be raised to 350°C or higher.

### (Example 6)

In Examples 1 to 3 among above-described Examples 1 to 5, the temperature of the exhaust gas supplied to the purifier 16 cannot be raised to 350°C in some cases depending on the flow rate of the cathode gas, which is to be increased or reduced, and on the magnitude of the power generation output, which is to be reduced. It has been found that, for example, when the flow rate of the cathode gas is reduced from 49 NLM under the rated operating conditions to 10 NLM as in the SOFC system 100 according to Example 1 of the embodiment, the temperature of the exhaust gas can be raised to about 270°C, but it cannot be raised until reaching 350°C. It has also been found that, when the flow rate of the cathode gas is increased from 49 NLM under the rated operating conditions to 70 NLM as in the SOFC system 100 according to Example 2 of the embodiment, the temperature of the exhaust gas can be raised to about 290°C, but it cannot be raised until reaching 350°C. It has been further found that, when the power generation output of the SOFC 1 is reduced from 700 W under the rated operating conditions to 200 W as in the SOFC system 100 according to Example 3 of the embodiment, the temperature of the exhaust gas can be raised to about 250°C, but it cannot be raised until reaching 350°C.

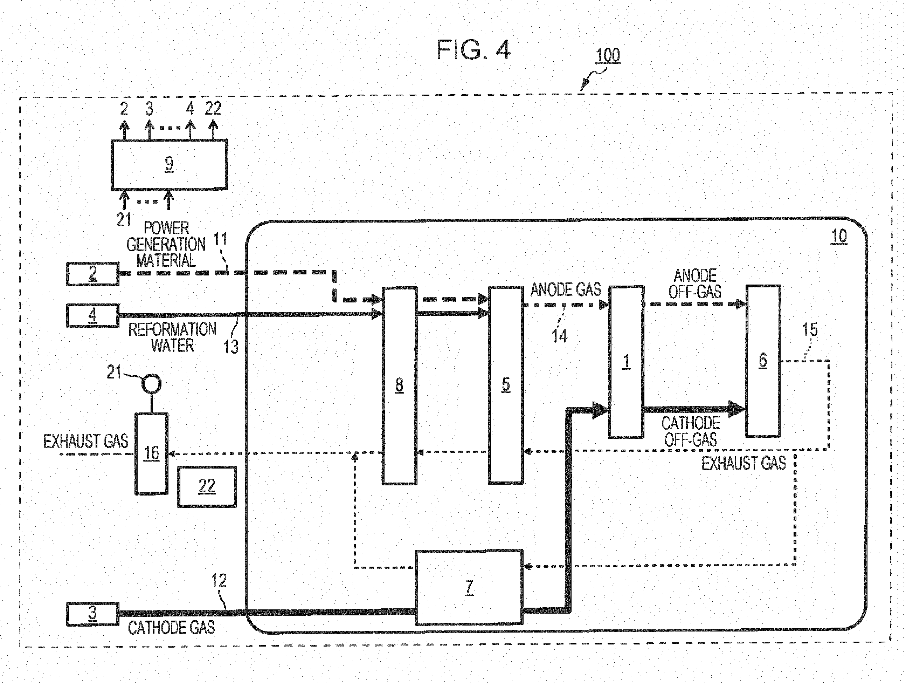

Taking the above point into consideration, as illustrated in Fig. 4, the SOFC system 100 according to Example 6 of the embodiment may further include, in addition to the configuration of the SOFC system 100 according to the embodiment illustrated in Fig. 1, a temperature sensor 21 for sensing the temperature of the purifier 16, and a heater 22 for heating the purifier 16. Fig. 4 illustrates one example of a configuration of the SOFC system 100 according to Example 6 of the embodiment of the present disclosure.

The SOFC system 100 according to Example 6 of the embodiment has the same configuration as the SOFC system 100 according to the embodiment illustrated in Fig. 1 except for further including the temperature sensor 21 and the heater 22. In view of the above point, the same members in the SOFC system 100 according to Example 6 of the embodiment as those in the SOFC system 100 according to Example 1 illustrated in Fig. 1 are denoted by the same reference symbols, and description of the configuration of the SOFC system 100 according to Example 6 is omitted. A thermocouple, for example, can be used as the temperature sensor 21.

It is assumed here that the temperature of the purifier 16 is raised, for example, by increasing or reducing the flow rate of the cathode gas supplied to the cathode gas supplier 3, or by reducing the power generation output of the SOFC 1 in accordance with the control command from the controller 9. When, under the above assumption, the controller 9 determines, on the basis of a result sensed by the temperature sensor 21 disposed in the purifier 16, that the temperature of the purifier 16 does not reach, e.g., 350°C, the controller 9 instructs the heater 22 to start up heating of the purifier 16 until the temperature of the purifier 16 reaches 350°C. Thus, in the SOFC system 100 according to Example 6 of the embodiment, when the temperature of the purifier 16 is insufficient, the purifier 16 can be heated by the heater 22 such that the temperature of the purifier 16 is raised to 350°C.

The present disclosure can be widely utilized in a solid oxide fuel cell system including a purification catalyst acting to remove substances to be cleaned up, which are contained in exhaust gas.

## Claims

1. A solid oxide fuel cell system comprising:
a reformer (5) configured to reform a power generation gas supplied to the reformer (5), and to produce hydrogen-containing gas as anode gas;
a solid oxide fuel cell (1) configured to generate, through an electrochemical reaction, electric power from the anode gas produced by the reformer (5) and cathode gas containing oxygen;
a combustor (6) configured to burn anode off-gas and cathode off-gas both discharged from the solid oxide fuel cell (1), and to produce exhaust gas;
a purifier (16) configured to be heated by heat of the exhaust gas produced by the combustor (6), and including a purification catalyst to remove substances to be cleaned up, those substances being contained in the exhaust gas; and
a controller (9),
**characterized in that** the temperature of the purifier (16) is not lower than 150°C and not higher than 250°C during operation, and
the controller (9) is configured to raise the temperature of the purifier (16) to 300°C or higher for a predetermined time so as to recover activity of the purification catalyst after SO2 poisoning.

2. The solid oxide fuel cell system according to Claim 1, further comprising a cathode gas supplier (3) configured to supply the cathode gas to the solid oxide fuel cell (1), and a heat-exchanger (7) configured to exchange heat between the cathode gas supplied from the cathode gas supplier (3) and a portion of the exhaust gas going to the purifier (16), wherein the controller (9) is configured to raise the temperature of the purifier (16) by controlling the cathode gas supplier (3) to reduce a flow rate of the cathode gas supplied to the solid oxide fuel cell (1).

3. The solid oxide fuel cell system according to Claim 1, further comprising a cathode gas supplier (3) configured to supply the cathode gas to the solid oxide fuel cell (1), and a heat-exchanger (7) configured to exchange heat between the cathode gas supplied from the cathode gas supplier (3) and a portion of the exhaust gas used to heat the purifier (16),
wherein the controller (9) is configured to raise the temperature of the purifier (16) by controlling the cathode gas supplier (3) to increase a flow rate of the cathode gas supplied to the solid oxide fuel cell (1).

4. The solid oxide fuel cell system according to Claim 1, wherein the controller (9) is configured to raise the temperature of the purifier (16) by performing control to reduce a power generation output of the solid oxide fuel cell (1).

5. The solid oxide fuel cell system according to Claim 1, further comprising a power generation gas supplier (2) configured to supply the power generation gas to the reformer (5),
wherein the controller (9) is configured to raise the temperature of the purifier (16) by controlling the power generation gas supplier (2) to increase a flow rate of the power generation gas supplied to the reformer (5).

6. The solid oxide fuel cell system according to Claim 1, further comprising a reformation water supplier (4) configured to supply reformation water utilized to reform the power generation gas in the reformer (5); and
an evaporator (8) configured to evaporate the reformation water supplied from the reformation water supplier (4) by utilizing heat of the exhaust gas, and to produce steam,
wherein the controller (9) is configured to raise the temperature of the purifier (16) by controlling the reformation water supplier (4) to reduce a flow rate of the reformation water supplied to the evaporator (8).

7. The solid oxide fuel cell system according to Claim 2, further comprising a temperature sensor (21) configured to sense the temperature of the purifier (16); and
a heater (22) configured to heat the purifier (16),
wherein the controller (9) is configured to control the heater (22) to heat the purifier (16) upon determining, on basis of a result sensed by the temperature sensor (21), that the temperature of the purifier (16) does not reach 300°C when the temperature of the purifier (16) is raised.

8. The solid oxide fuel cell system according to Claim 1, further comprising an indicator (24) configured to indicate an operation status of the solid oxide fuel cell (1),
wherein, during a period in which the temperature of the purifier (16) is raised to 300°C or higher, the indicator (24) is configured to indicate that the operation of raising the temperature of the purifier (16) is being performed.

## Patentansprüche

1. Festoxid-Brennstoffzellensystem, mit:
einem Reformer (5), der ausgebildet ist, ein Leistungserzeugungsgas, das dem Reformer (5) zugeleitet ist, zu reformieren und Wasserstoff enthaltendendes Gas als Anodengas zu erzeugen;
einer Festoxid-Brennstoffzelle (1), die ausgebildet ist, durch eine elektrochemische Reaktion elektrische Leistung aus dem von den Reformer (5) erzeugten Anodengas und einem Sauerstoff enthaltenden Kathodengas zu erzeugen;
einer Verbrennungseinheit (6), die ausgebildet ist, Anoden-Ausgangsgas und Kathoden-Ausgangsgas, die beide aus der Festoxid-Brennstoffzelle (1) abgegeben werden, zu verbrennen und Abgas zu erzeugen;
einer Reinigungseinheit (16), die ausgebildet ist, durch Wärme des von der Verbrennungseinheit (6) erzeugten Abgases erwärmt zu werden und die einen Reinigungskatalysator aufweist, um zu entsorgende Substanzen zu entfernen, wobei diese Substanzen in dem Abgas enthalten sind; und
einer Steuerung (9),
**dadurch gekennzeichnet, dass**
die Temperatur der Reinigungseinheit (16) nicht niedriger als 150 °C und nicht höher als 250 °C während des Betriebs ist, und
die Steuerung (9) ausgebildet ist, die Temperatur der Reinigungseinheit (16) auf 300 °C oder höher für eine vorbestimmte Zeitdauer anzuheben, sodass die Aktivität des Reinigungskatalysators nach einer SO2-Vergiftung wiederhergestellt wird.

2. Festoxid-Brennstoffzellensystem nach Anspruch 1, das ferner eine Kathodengasversorgung (3) aufweist, die ausgebildet ist, das Kathodengas der Festoxid-Brennstoffzelle (1) zuzuführen, und einen Wärmetauscher (7) aufweist, der ausgebildet ist, Wärme zwischen dem von der Kathodengasversorgung (3) zugeführten Kathodengas und einem Teil des Gases, der der Reinigungseinheit (16) zugeleitet wird, auszutauschen,
wobei die Steuerung (9) ausgebildet ist, die Temperatur der Reinigungseinheit (16) anzuheben, indem die Kathodengasversorgung (3) so gesteuert wird, dass sie eine Durchflussrate des der Festoxid-Brennstoffzelle (1) zugeleiteten Kathodengases reduziert.

3. Festoxid-Brennstoffzellensystem nach Anspruch 1, das ferner eine Kathodengasversorgung (3) aufweist, die ausgebildet ist, das Kathodengas der Festoxid-Brennstoffzelle (1) zuzuführen, und einen Wärmetauscher (7) aufweist, der ausgebildet ist, Wärme zwischen dem von der Kathodengasversorgung (3) zugeführten Kathodengas und einem Teil des Abgases, der zum Erwärmen der Reinigungseinheit (16) verwendet wird, auszutauschen,
wobei die Steuerung (9) ausgebildet ist, die Temperatur der Reinigungseinheit (16) anzuheben, indem die Kathodengasversorgung (3) so gesteuert wird, dass sie eine Durchflussrate des der Festoxid-Brennstoffzelle (1) zugeführten Kathodengases erhöht.

4. Festoxid-Brennstoffzellensystem nach Anspruch 1, wobei die Steuerung (9) ausgebildet ist, die Temperatur der Reinigungseinheit (16) anzuheben, indem eine Steuerung zur Reduzierung einer Leistungserzeugungsausgabe der Festoxid-Brennstoffzelle (1) ausgeführt wird.

5. Festoxid-Brennstoffzellensystem nach Anspruch 1, das ferner eine Leistungserzeugungsgasversorgung (2) aufweist, die ausgebildet ist, den Reformer (5) das Leistungsversorgungsgas zuzuführen,
wobei die Steuerung (9) ausgebildet ist, die Temperatur der Reinigungseinheit (16) anzuheben, indem die Leistungserzeugungsgasversorgung (2) so gesteuert wird, dass sie die Durchflussrate des dem Reformer (5) zugeführten Leistungserzeugungsgases erhöht.

6. Festoxid-Brennstoffzellensystem nach Anspruch 1, das ferner aufweist:
eine Reformationswasserversorgung (4), die ausgebildet ist, Reformationswasser bereitzustellen, das verwendet wird, um das Leistungsversorgungsgas in dem Reformer (5) zu reformieren; und
einen Verdampfer (8), der ausgebildet ist, das von der Reformationswasserversorgung (4) bereitgestellte Reformationswasser unter Anwendung von Wärme des Abgases zu verdampfen und Dampf zu erzeugen,
wobei die Steuerung (9) ausgebildet ist, die Temperatur der Reinigungseinheit (16) anzuheben, indem die Reformationswasserversorgung (4) so gesteuert wird, dass sie eine Durchflussrate des dem Verdampfer (8) zugeführten Reformationswassers reduziert.

7. Festoxid-Brennstoffzellensystem nach Anspruch 2, das ferner umfasst:
einen Temperatursensor (21), der ausgebildet ist, die Temperatur der Reinigungseinheit (16) zu erfassen; und
eine Heizung (22), die ausgebildet ist, die Reinigungseinheit (16) zu erwärmen,
wobei die Steuerung (9) ausgebildet ist, die Heizung (22) so zu steuern, dass sie die Reinigungseinheit (16) erwärmt, wenn auf der Grundlage eines von dem Temperatursensor (21) erfassten Ergebnisses ermittelt wird, dass die Temperatur der Reinigungseinheit (16) 300 °C nicht erreicht, wenn die Temperatur der Reinigungseinheit (16) angehoben wird.

8. Festoxid-Brennstoffzellensystem nach Anspruch 1, das ferner einen Indikator (24) aufweist, der ausgebildet ist, einen Betriebsstatus der Festoxid-Brennstoffzelle (1) anzugeben,
wobei während einer Zeitdauer, in der die Temperatur der Reinigungseinheit (16) auf 300 °C oder höher angehoben wird, der Indikator (24) ausgebildet ist anzugeben, dass der Vorgang des Anhebens der Temperatur der Reinigungseinheit (16) ausgeführt wird.

## Revendications

1. Système pile à combustible à oxyde solide comprenant :
un reformeur (5) configuré pour reformer un gaz de production d'énergie alimenté au reformeur (5), et pour produire du gaz contenant de l'hydrogène comme gaz d'anode ;
une pile à combustible à oxyde solide (1) configurée pour générer, à travers une réaction électrochimique, de l'énergie électrique à partir du gaz d'anode produit par le reformeur (5) et du gaz de cathode contenant de l'oxygène ;
un dispositif de combustion (6) configuré pour brûler le gaz d'échappement d'anode et le gaz d'échappement de cathode tous deux évacués de la pile à combustible à oxyde solide (1), et pour produire du gaz d'échappement ;
un dispositif de purification (16) configuré pour être chauffé par le chauffage du gaz d'échappement produit par le dispositif de combustion (6), et comprenant un catalyseur de purification pour retirer les substances à nettoyer, ces substances étant contenues dans le gaz d'échappement ; et
un dispositif de commande (9),
**caractérisé en ce que**
la température du dispositif de purification (16) n'est pas inférieure à 150°C et n'est pas supérieure à 250°C durant le fonctionnement, et
le dispositif de commande (9) est configuré pour élever la température du dispositif de purification (16) jusqu'à 300°C ou plus sur une durée prédéterminée afin de récupérer l'activité du catalyseur de purification après l'empoisonnement au SO₂.

2. Système pile à combustible à oxyde solide selon la revendication 1, comprenant en outre un dispositif d'alimentation de gaz de cathode (3) configuré pour alimenter le gaz de cathode à la pile à combustible à oxyde solide (1), et un dispositif d'échange de chaleur (7) configuré pour échanger de la chaleur entre le gaz de cathode alimenté depuis le dispositif d'alimentation de gaz de cathode (3) et une partie du gaz d'échappement allant vers le dispositif de purification (16), le dispositif de commande (9) étant configuré pour élever la température du dispositif de purification (16) en commandant au dispositif d'alimentation de gaz de cathode (3) de réduire un débit d'écoulement du gaz de cathode alimenté à la pile à combustible à oxyde solide (1).

3. Système pile à combustible à oxyde solide selon la revendication 1, comprenant en outre un dispositif d'alimentation de gaz de cathode (3) configuré pour alimenter le gaz de cathode à la pile à combustible à oxyde solide (1), et un dispositif d'échange de chaleur (7) configuré pour échanger de la chaleur entre le gaz de cathode alimenté depuis le dispositif d'alimentation de gaz de cathode (3) et une partie du gaz d'échappement utilisée pour chauffer le dispositif de purification (16),
le dispositif de commande (9) étant configuré pour élever la température du dispositif de purification (16) en commandant au dispositif d'alimentation de gaz de cathode (3) d'accroître un débit d'écoulement du gaz de cathode alimenté à la pile à combustible à oxyde solide (1).

4. Système pile à combustible à oxyde solide selon la revendication 1, le dispositif de commande (9) étant configuré pour élever la température du dispositif de purification (16) en exécutant la commande afin de réduire la sortie de production d'énergie de la pile à combustible à oxyde solide (1).

5. Système pile à combustible à oxyde solide selon la revendication 1, comprenant en outre un dispositif d'alimentation de gaz de production d'énergie (2) configuré pour alimenter le gaz de production d'énergie au reformeur (5),
le dispositif de commande (9) étant configuré pour élever la température du dispositif de purification (16) en commandant au dispositif d'alimentation de gaz de production d'énergie (2) d'accroître un débit d'écoulement du gaz de production d'énergie alimenté au reformeur (5).

6. Système pile à combustible à oxyde solide selon la revendication 1, comprenant en outre un dispositif d'alimentation d'eau de reformage (4) configuré pour alimenter l'eau de reformage utilisée pour reformer le gaz de production d'énergie dans le reformeur (5) ; et
un dispositif d'évaporation (8) configuré pour évaporer l'eau de reformage alimentée depuis le dispositif d'alimentation d'eau de reformage (4) en utilisant la chaleur du gaz d'échappement, et pour produire de la vapeur,
le dispositif de commande (9) étant configuré pour élever la température du dispositif de purification (16) en commandant au dispositif d'alimentation d'eau de reformage (4) de réduire un débit d'écoulement de l'eau de reformage alimentée au dispositif d'évaporation (8).

7. Système pile à combustible à oxyde solide selon la revendication 2, comprenant en outre un capteur de température (21) configuré pour capter la température du dispositif de purification (16) ; et
un dispositif de chauffage (22) configuré pour chauffer le dispositif de purification (16),
le dispositif de commande (9) étant configuré pour commander au dispositif de chauffage (22) de chauffer le dispositif de purification (16) lors de la détermination, sur la base d'un résultat détecté par le capteur de température (21), que la température du dispositif de purification (16) n'atteint pas 300°C lorsque la température du dispositif de purification (16) est élevée.

8. Système pile à combustible à oxyde solide selon la revendication 1, comprenant en outre un indicateur (24) configuré pour indiquer un état de fonctionnement de la pile à combustible à oxyde solide (1),
dans lequel, durant une période dans laquelle la température du dispositif de purification (16) est élevée à 300°C ou plus, l'indicateur (24) est configuré pour indiquer que l'opération d'élévation de la température du dispositif de purification (16) est exécutée.
